Europäisches Patentamt

European Patent Office

Office européen des brevets

(11) Numéro de publication: **0 274 796 B1**

## (12) FASCICULE DE BREVET EUROPEEN

(45) Date de publication de fascicule du brevet: **19.05.93**  (51) Int. Cl.⁵: **G02F 1/29**, G02F 1/015

(21) Numéro de dépôt: **87202544.0**

(22) Date de dépôt: **16.12.87**

(54) **Elément de commutation optique entre deux guides de lumière et matrice de commutation optique formée de ces éléments de commutation.**

(30) Priorité: **23.12.86 FR 8618046**

(43) Date de publication de la demande:
**20.07.88 Bulletin 88/29**

(45) Mention de la délivrance du brevet:
**19.05.93 Bulletin 93/20**

(84) Etats contractants désignés:
**DE FR GB IT NL SE**

(56) Documents cités:
**FR-A- 2 558 271**

**APPLIED OPTICS, vol. 25, no. 9, 1er mai 1986, pages 1484-1490, Optical Society of America, New York, US; H. INOUE et al.: "Switching characteristics of GaAs directional coupler optical switches"**

**APPLIED PHYSICS LETTERS, vol. 40, no. 8, 15 avril 1982, pages 653-655, American Institute of Physics, New York, US; A. CARENCO et al.: "InP electro-optic directional coupler"**

**APPLIED OPTICS, vol. 24, no. 9, 1er mai 1985, pages 1260-1264, Optical Society of Ameri-**

ca, New York, US; L.A. MOLTER-ORR et al.:
**"Multiple coupled waveguide switches using alternating delta beta phase mismatch"**

**IEEE JOURNAL OF OUANTUM ELECTRONICS, vol. OE-21, no. 8, août 1985, pages 1147-1151, IEEE, New York, US; J.P. DON-NELLY et al.: "Single-mode optical wave-guides and phase modulators in the InP material system"**

(73) Titulaire: **ALCATEL ALSTHOM RECHERCHE
Société Anonyme
Route de Nozay
91460 Marcoussis(FR)**

(72) Inventeur: **Erman, Marko Société Civile
S.P.I.D.
156, boulevard Haussmann
F-75008 Paris(FR)**

(74) Mandataire: **Dalsace, Michel et al
c/o Sospi 14-16, rue de la Baume
F-75008 Paris (FR)**

EP 0 274 796 B1

## Description

L'invention concerne un élément de commutation optique intégré, ayant deux rubans formant desdits premier et second guides de lumière $G_1$ et $G_2$, monomodes, confinés sur un substrat S, et parallèles dans la zone de commutation, et ayant au moins deux électrodes pour l'application de potentiels de commande de la commutation, associées obliquement chacune à un guide, avec une extrémité couvrant le guide, chacune découvrant progressivement le guide à partir de cette extrémité en s'écartant de la zone de commutation selon un angle $\theta$ par rapport au guide.

L'invention concerne en outre une matrice de commutation optique formée d'un nombre NxN de ces éléments de commutation.

L'invention trouve son application dans la commutation de signaux optiques transportés par fibres optiques, par exemple dans le domaine des télécommunications, domaine dans lequel la commutation entre de nombreuses fibres optiques doit être rendue possible pour éviter de devoir convertir les signaux optiques transportés par les fibres en signaux électriques lors de la commutation entre les différents abonnés.

Un élément de commutation optique apte à former une matrice de commutation, est connu de la publication intitulée : "Low-loss GaAs-$Ga_{1-x}Al_xAs$ double-heterostructure directional coupler" par A.Carenco, P. Sansonetti and alii dans Technical Digest, of the 7th Topical Meating on Integrated and Guide-Wave Optics, Orlando Hyatt Hotel, Kissimee, Florida, April 24-26, 1984" sous la référence Th B 4-1".

Ce document décrit un élément de commutation formé de deux guides de lumière constitués par des rubans en GaAs. Ces rubans sont parallèles et réalisés côte à côte, à une très faible distance l'un de l'autre en surface d'une couche de $Ga_{1-x}Al_xAs$ qui sert de couche de confinement entre ces guides de lumière et le substrat plan en GaAs. Une autre couche de $Ga_{1-x}Al_xAs$ couvre chacun des rubans formant les guides. Ceux-ci sont d'autre part réalisés en relief sur le substrat par gravure d'une couche de départ. Des électrodes de type Schottky sont enfin réalisées en surface de chacun des guides, tandis que la face opposée du substrat est munie d'une couche formant un contact ohmique.

Les guides transportent chacun une onde monomode et, du fait de la petite distance qui les sépare latéralement, une polarisation appliquée sur l'un ou l'autre des guides permet de changer le couplage des deux guides monomodes, assurant ainsi la commutation souhaitée.

Une matrice de commutation peut être réalisée à partir de tels éléments de commutation en réunissant les guides d'un élément aux guides d'un autre élément par des tronçons de guide courbes.

Mais une telle structure présente plusieurs inconvénients. Tout d'abord, la distance latérale entre les rubans sur le substrat est un facteur extrêmement critique pour le comportement de l'élément de commutation. Or, la distance latérale entre deux rubans semiconducteurs réalisés sur un plan est difficilement contrôlable. Dans le dispositif décrit dans le document cité, cette distance latérale est de l'ordre de 2 à 3μm. Comme la longueur de couplage, c'est-à-dire la dimension longitudinale des guides de lumière, est liée à cette distance latérale, cette dimension longitudinale est dans ce cas de plusieurs mm, ce qui est réellement énorme en termes de dimensions de dispositifs intégrés.

De plus, des tronçons de guide courbes raccordent les éléments de commutation entre eux pour former une matrice. Ces tronçons effectuent obligatoirement ce raccordement sous un angle très faible, ce qui entraîne qu'une telle matrice occupe une très grande surface. D'autre part, les procédés de gravure ou de croissance épitaxiale employés pour réaliser ces tronçons sont toujours anisotropes, ce qui entraîne que les parois externes de ces tronçons sont rugueuses ou présentent des marches provoquant des pertes dans ces tronçons.

Un élément de commutation tel que décrit dans le préambule est connu du brevet US 4 391 486. Selon le document cité, l'élément de commutation connu comporte deux guides de lumière réalisés confinés sur un substrat en niobate de lithium. Les deux guides de lumière sont parallèles et séparés par une distance équivalente à la valeur de quelques longueurs d'onde du rayonnement transporté par les guides, donc une distance très faible, condition indispensable au couplage entre guides. Les guides sont parallèles sur une longueur L différente de la longueur de couplage $l_0$. Deux paires d'électrodes sont disposées obliquement en surface des guides. Ces électrodes sont symétriques par rapport à l'axe longitudinal des guides. L'arrangement est tel que les électrodes couvrent complètement les guides à chaque extrémité de la zone de commutation et découvrent progressivement les guides lorsque l'on se rapproche de l'axe de symétrie transversal de la zone de commutation. Dans cette région centrale de la zone de commutation, les électrodes sont adjacentes aux guides et sont dirigées vers l'extérieur par rapport à la zone de commutation. Les électrodes des deux paires n'ont pas de points communs.

Comme le matériau dans lequel est réalisé l'élément de commutation n'est pas semiconducteur, les potentiels de commande de la commutation sont uniquement appliqués sur les électrodes obliques.

Le système connu est prévu pour que les potentiels appliqués sur les électrodes et aptes à provoquer la la commutation soient peu critiques. Il n'en reste pas moins que, comme dans le premier état de la technique cité, la distance latérale entre guides, qui est faible (3 μm) pour permettre le couplage, est toujours un facteur critique, d'autant plus que les guides (2 μm) sont obtenus par une méthode de diffusion. D'autre part, dans la zone de commutation, la lumière se propage d'un guide à l'autre à travers le substrat. Donc dans cette région, la lumière n'est pas "guidée" et il en résulte automatiquement des pertes. De plus, le matériau utilisé pour réaliser les guides, qui n'est pas semiconducteur, n'est pas en synergie de fabrication avec les circuits intégrés.

Or, pour le domaine envisagé de l'application aux télécommunications, la demande est pour des circuits électro-optiques toujours plus performants, toujours plus miniaturisés, et toujours moins coûteux, c'est-à-dire d'une réalisation plus aisée.

La présente invention permet de résoudre ces problèmes à l'aide d'un élément de commutation tel que défini dans le préambule, caractérisé en ce que la distance d entre guides est supérieure à la distance dite de couplage et qu'un ruban de même matériau que les guides emplit l'intervalle d entre ces derniers sur la longueur de couplage D pour former avec les guides la zone de commutation, en ce que les matériaux du substrat S d'une part et des guides $G_1$, $G_2$ d'autre part, sont de type semiconducteur de conductivités différentes et qu'une électrode supplémentaire dite première électrode est en contact avec le substrat S pour l'application d'un potentiel de référence par rapport à ceux appliqués sur les électrodes obliques dites seconde et troisième électrodes, en ce que les électrodes obliques en forme de rubans ont leur extrémité couvrant les guides à proximité de l'axe de symétrie transversale XX' de la zone de commutation, de part et d'autre de cet axe, en ce que les guides $G_1$, $G_2$ sont parallèles sur une longueur 2D symétriquement par rapport à l'axe de symétrie transversale XX' de la zone de commutation, en ce que lesdites seconde et troisième électrodes (11, 21) ont sensiblement une longueur D de part et d'autre de cet axe, et en ce eue l'angle $\theta$ entre un guide et son électrode est donné par $\theta^2 \simeq 2(n_1 - n_o)/n_1$, relation dans laquelle $n_1$ est l'indice de réfraction du matériau des guides et $n_o$ celui du substrat avec $n_o < n_1$ pour le confinement de la lumière dans les guides.

Selon une réalisation de l'élément de commutation, les guides $G_1$, $G_2$ et les électrodes ont la forme de rubans ayant sensiblement la même dimension transversale w.

Selon une réalisation plus élaborée de l'élément de commutation selon l'invention, ce dernier comprend en outre des quatrième et cinquième électrodes respectivement symétriques des seconde et troisième électrodes par rapport à l'axe longitudinal YY' de symétrie des guides.

Selon une réalisation préférentielle, cet élément de commutation comprend en outre une dite sixième électrode en forme de ruban s'étendant sensiblement sur une longueur 2D et symétriquement par rapport à l'axe transversal XX' sur la zone comprise entre les deux guides et sur une largeur mesurée perpendiculairement à l'axe longitudinal YY' qui n'excède la distance d séparant les guides, et disposée de manière à ne pas présenter de contact électrique avec l'une des électrodes précédentes.

Selon l'invention, il peut être en outre réalisé une matrice de commutation comportant un nombre N d'entrées $I_1$, $I_2$, ..., $I_N$, et un nombre N de sorties $O_1$, $O_2$, .., $O_N$ entre lesquelles s'opère la commutation, caractérisée en ce qu'elle comprend un nombre N (N−1)/2 éléments de commutation d'un des types précédents appliqués en quinconce sur N guides de lumière disposés parallèlement de façon équidistante entre les N entrées et les N sorties.

Dans ces conditions, le dispositif selon l'invention présente entre autres, les avantages suivants :

- du fait que la zone de commutation comprend un ruban qui emplit l'intervalle entre les guides sur la distance D de couplage, la lumière est toujours guidée, ce qui n'est le cas dans aucun des dispositifs connus ;

- la dimension d'un élément de commutation parallèlement à la direction de propagation de la lumière est très petite devant celle d'un tel élément selon le premier art antérieur cité ;

- les rubans formant aussi bien les guides de lumière que la zone de commutation peuvent être réalisés parallèlement à une direction cristallographique. En conséquence, ils peuvent être réalisés soit par croissance épitaxiale localisée, soit par gravure anisotrope, procédés qui fournissent pour les rubans des faces latérales planes, permettent d'obtenir un bon confinement de la lumière et des pertes minimales ;

- la distance d entre les rubans formant les guides n'est pas critique. La réalisation d'une distance latérale faible comme dans l'état de la technique est connue de l'homme du métier comme un problème épineux. Le dispositif selon l'invention est donc d'une réalisation aisée, car la distance d est grande devant celle de l'état de la technique.

- les rubans formant les guides peuvent être parallèles à une direction cristallographique sur leur entière longueur. Il n'est pas nécessaire de prévoir de sections courbes pour raccorder les sorties et entrées de l'élément de commutation aux sections de guides servant au transport de la lumière vers un autre élément de commutation ;

- on peut prévoir de nombreux éléments de commutation sur un guide sans que ce dernier change de direction. Une matrice est donc formée d'un nombre aussi grand que voulu de guides d'onde tous parallèles et tous équidistants sans que le pas de répétition soit critique. Le système est donc d'une réalisation particulièrement aisée ;

- seules les électrodes sont réalisées dans une direction qui peut être différente des axes cristallographiques. Mais elles sont réalisées par un système de masquage bien connu de l'homme du métier et facile à mettre en oeuvre ;

- du fait que les dimensions de l'élément de commutation sont très petites et du fait que plusieurs éléments peuvent être disposés d'une manière très rapprochée sur chaque système de guides, la surface occupée par une matrice de commutation peut être très faible. Le nombre des éléments est en outre inférieur au nombre d'éléments nécessaire selon le premier art antérieur cité pour une matrice comparable ;

- l'élément de commutation selon l'invention permet soit la commutation proprement dite d'un guide vers l'autre, soit le multiplexage de signaux de différentes longueurs d'onde ;

- l'élément, étant réalisé sur un matériau semiconducteur, est en synergie de fabrication avec d'autres éléments actifs ou passifs pour former un circuit intégré.

L'invention sera mieux comprise au moyen de la description suivante illustrée par les figures schématiques annexées dont :

- La figure 1a qui représente l'élément de commutation selon l'invention vu du dessus.
- La figure 1b qui est une représentation symbolique d'un tel élément de commutation.
- La figure 2 qui représente l'élément de commutation dépourvu de ses électrodes et vu du dessus.
- Les figures 3a et 3b qui représentent l'élément de commutation en coupe selon l'axe I-I dans deux exemples de réalisation différents.
- Les figures 4a et 4b qui représentent cet élément de commutation en coupe selon l'axe II-II dans respectivement les deux exemples de réalisation des figures 3a et 3b.
- La figure 5a qui représente le trajet des faisceaux lumineux dans le cas où la commutation est bloquée.
- La figure 5b qui représente le trajet des faisceaux lumineux dans le cas d'un multiplexage du guide 1 dans le guide 2.
- La figure 5c qui représente le trajet des faisceaux lumineux dans le cas d'un multiplexage du guide 2 dans le guide 1.
- La figure 6 qui représente le trajet des faisceaux lumineux dans le cas de la commutation du guide 2 dans le guide 1 et du guide 1 dans le guide 2.
- La figure 7 qui représente en coupe l'élément de commutation selon l'invention dans un premier exemple de réalisation.
- La figure 8a qui représente en coupe l'élément de commutation dans un second exemple de réalisation.
- La figure 8b qui représente en coupe l'élément de commutation dans un troisième exemple de réalisation.
- La figure 9 qui représente schématiquement vue du dessus une matrice de commutation composée d'éléments selon l'invention et comprenant N entrées et N sorties.

La figure 1a représente donc schématiquement vu du dessus un élément de commutation selon l'invention. Cet élément comprend deux guides de lumière $G_1$ et $G_2$ réalisés en surface d'un substrat S. Le substrat est formé dans un matériau semiconducteur d'indice de réfraction $n_0$. Les guides de lumière $G_1$ et $G_2$ sont des rubans en un matériau semiconducteur d'indice de réfraction $n_1$ tel que :

$$n_0 < n_1,$$

ce qui permet le confinement de la lumière dans les guides $G_1$ et $G_2$.

Les guides $G_1$ et $G_2$ présentent, parallèlement au plan de la figure 1a et perpendiculairement à leur axe optique, une dimension w. Ils sont d'autre part séparés d'une distance d, dite distance latérale, suffisamment grande pour s'assurer que la lumière qui est transportée par l'un des guides ne passe pas dans l'autre guide par couplage.

Un flux lumineux $\phi_1$ peut être injecté à l'entrée $I_1$ du guide $G_1$ et un flux lumineux $\phi_2$ à l'entrée $I_2$ du guide $G_2$. Un flux lumineux $\phi'_1$ peut être recueilli à la sortie $O_1$ du guide $G_1$ et un flux lumineux $\phi'_2$ à la sortie $O_2$ du guide $G_2$. Ces flux sont transportés par les guides dans les directions indiquées par les flèches sur la figure 1a.

Les guides $G_1$ et $G_2$, et la région intermédiaire 3 des guides sont munis d'électrodes 10, 11, 12, 21 et 22.

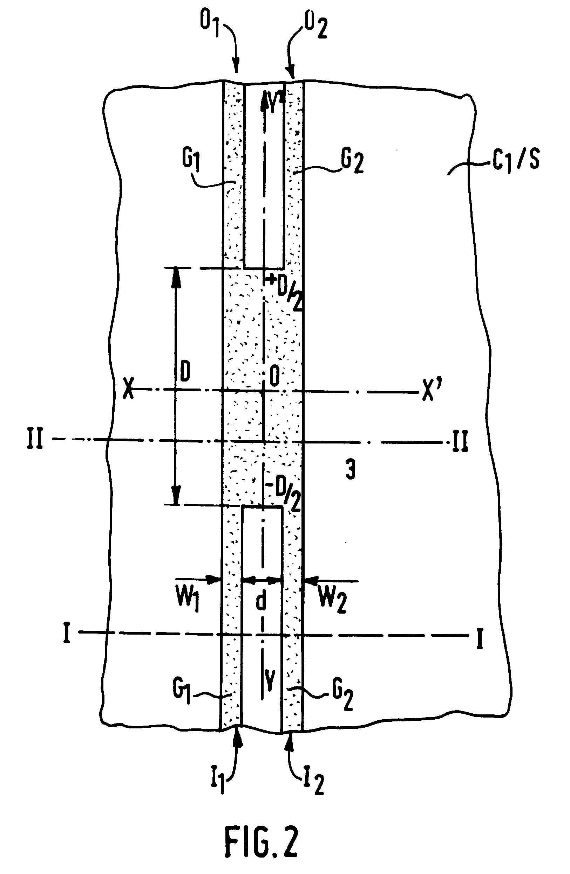

La figure 2 montre les configurations respectives de la zone intermédiaire 3, ou zone de commutation proprement dite, et des guides $G_1$ et $G_2$. La zone de commutation 3 est formée par un ruban du même matériau semiconducteur que les guides qui s'étend entre ces derniers et les relie sur une longueur D mesurée parallèlement à leur axe longitudinal de symétrie YY' supposé orienté dans la direction de propagation de la lumière, c'est-à-dire de Y vers Y' sur la figure 1a. La zone de commutation 3 s'étend donc de l'abscisse $-D/2$ à l'abscisse $+D/2$ mesurées sur cet axe.

Une électrode de contact 10 s'étend en surface de cette zone de commutation parallèlement à l'axe des guides. Ses dimensions sont au plus égale à la dimension d de la zone intermédiaire des guides perpendiculairement à leur axe longitudinal et supérieure à la dimension D parallèlement à l'axe des guides. Favorablement, l'électrode 10 pourra présenter dans cette direction une dimension environ égale à 2D et donc dépasser la zone intermédiaire d'une grandeur D/2 de part et d'autre. L'électrode 10 présentera d'autre part, dans sa partie centrale, un rétrécissement, en sorte que sa dimension perpendiculairement au guide y sera inférieure à d. Cette disposition est destinée à permettre la mise en place des électrode 11, 12, 21 et 22.

L'électrode de contact 11 présente la forme d'un ruban de largeur équivalente à la dimension w des guides. L'axe XX' étant l'axe de symétrie transversal de la région de commutation perpendiculaire à l'axe YY' longitudinal des guides, l'électrode 11 s'étend d'un point situé sur le guide $G_1$ à proximité de cet axe XX' et par exemple à l'abscisse $+\epsilon$ mesurée sur YY', $\epsilon$ étant choisi très petit devant D, jusqu'au point situé à l'abscisse $+D$ mesurée sur YY' et de telle manière que l'axe longitudinal du ruban 11 fait avec l'axe optique du guide $G_1$ un angle $-\theta$ mesuré dans le sens trigonométrique, le sommet de cet angle étant situé sur le guide $G_1$ à l'abscisse $+\epsilon$. Les électrodes 12, 22 et 21 se déduisent de l'électrode 11 par symétrie par rapport aux axes XX' et YY'.

L'angle $\theta$ choisi pour positionner les électrodes 11, 12, 21 et 22 par rapport aux axes des guides de lumière est déterminé en première approximation à partir de la relation :

$$n_1 \sin \theta_1 = n_0 \sin \theta_0$$

dans laquelle $n_1$ est l'indice du guide et $n_0$ l'indice du milieu adjacent aux parois du guide, notamment l'indice du substrat S, et $\theta_1$ et $\theta_0$ sont les angles d'incidence et de réfraction dans ces milieux. Pour que la lumière soit confinée dans le guide, il faut que :

$$\sin \theta_0 \simeq 1$$

donc :

$$\sin \theta_1 \simeq n_0/n_1 = 1 - \Delta_n/n_1$$

avec ;

$$\Delta_n = n_1 - n_0 \text{ et}$$
$$\theta = \pi/2 - \theta_1$$
$$\cos \theta = 1 - \Delta_n/n_1$$
$$1 - \theta^2/2 \simeq 1 - \Delta_n/n_1.$$

On choisira donc de placer les électrodes selon un angle donné par la relation 1 :

$$\theta^2 \simeq 2 \Delta_n/n_1.$$

Dans une forme de réalisation, les électrodes 10, 11, 12, 21 et 22 n'ont aucun contact entre elles et peuvent donc être polarisées indépendamment les unes des autres.

Dans une autre forme de réalisation, les électrodes 11 et 12 d'une part, et les électrodes 21 et 22 d'autre part sont reliées l'une à l'autre, et sont toutes alimentées simultanément.

Dans l'une ou l'autre de ces formes de réalisation, une électrode supplémentaire dite première électrode en contact avec le substrat S est prévue et les tensions de polarisation sont appliquées entre ladite première électrode reliée à un potentiel de référence par exemple à la masse et soit les électrodes 11 et 21 reliées entre elles, soit les électrodes correspondantes 12 et 22 reliées entre elles, soit les quatre électrodes 11, 12, 21 et 22 reliées entre elles, soit encore l'électrode 10. Ladite première électrode n'est pas représentée sur les dessins pour des raisons de clarté de ces derniers.

Dans ce qui suit on supposera se trouver toujours dans l'une des hypothèses précédentes.

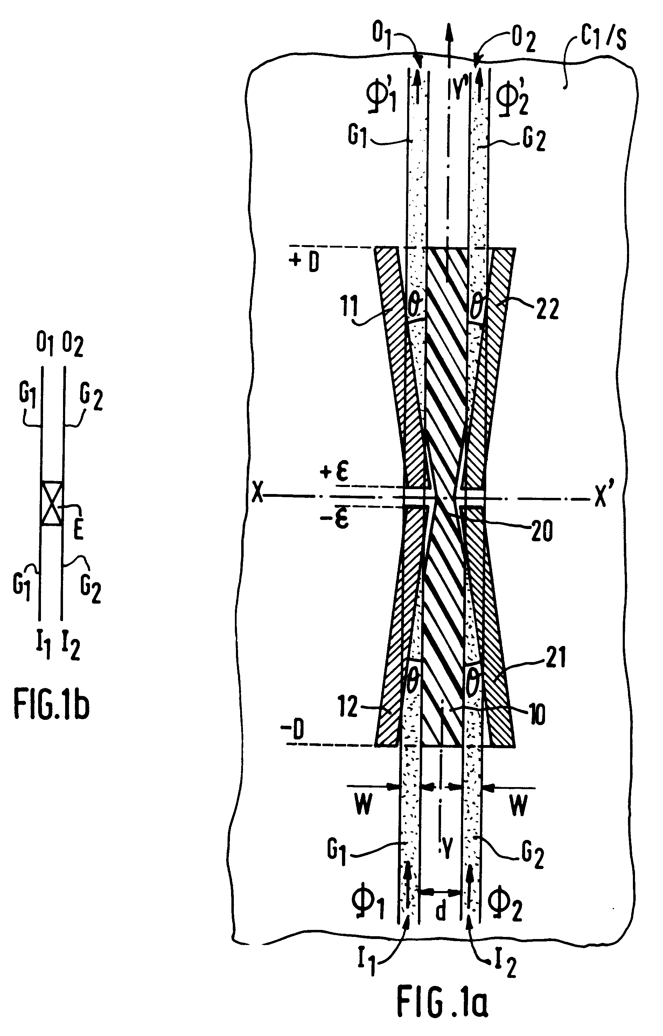

La figure 1b, montre une représentation symbolique de l'élément de commutation E constitué du système représenté figure 1a appliqué aux guides $G_1$ et $G_2$.

Le fonctionnement de l'élément de commutation selon l'invention est le suivant :
- Un flux lumineux $\theta_1$ de longueur d'onde $\lambda_1$ est injecté à l'entrée $I_1$ du guide $G_1$ et un flux lumineux de longueur d'onde $\lambda_2$ est injecté à l'entrée $I_2$ du guide $G_2$.
- Une tension est appliquée sur l'électrode 10 de telle manière qu'une variation d'indice négative apparaisse dans la zone intermédiaire 3. Dans ces conditions les faisceaux $\phi_1$ et $\phi_2$ transportés par $G_1$ et $G_2$, ne peuvent emprunter le passage offert par la zone intermédiaire 3 pour passer d'un guide dans l'autre. Ils circulent continûment dans les guides dans lesquels ils ont été injectés comme illustré par la figure 5a et sont recueillis respectivement aux sorties $O_1$ et $O_2$.

– Dans l'étape de commutation proprement dite, la tension cesse d'être appliquée sur l'électrode 10 et une tension est appliquée sur les électrodes 12 et 22 simultanément.

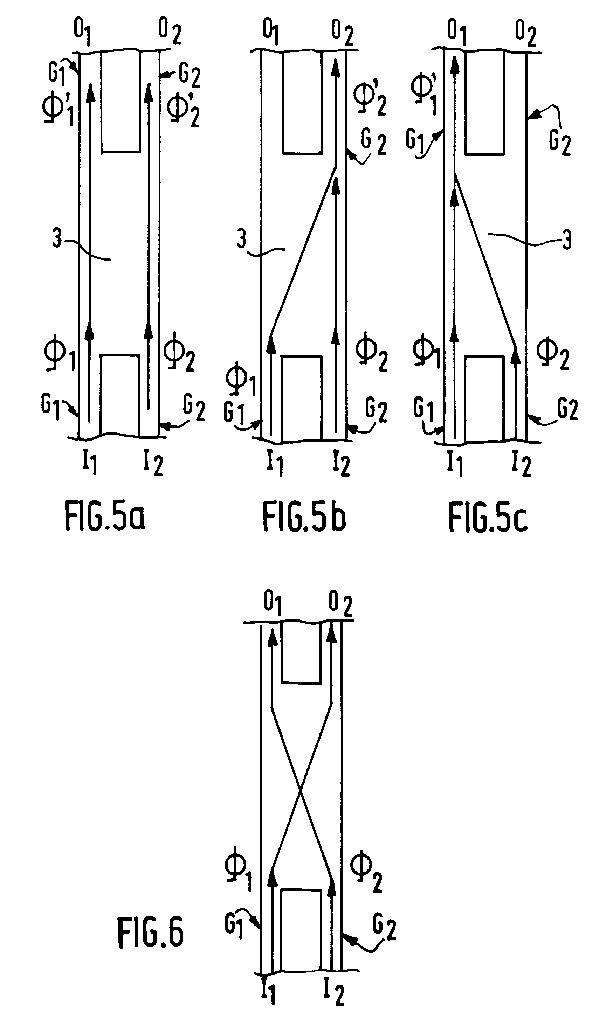

La tension appliquée sur l'électrode 12 dévie le faisceau $\phi_1$ vers la zone intermédiaire 3 et la tension appliquée sur l'électrode 22 redresse le faisceau $\phi_1$ pour le placer dans l'axe du guide $G_2$ où il continue à se propager. Sur la sortie $O_2$, est ainsi recueilli un faisceau $\phi'_2$ comprenant à la fois le faisceau $\phi_2$ de longueur d'onde $\lambda_2$ et le faisceau $\phi_1$ de longueur d'onde $\lambda_1$. Il y a multiplexage des signaux de longueur d'onde $\lambda_1$, $\lambda_2$ des guides $G_1$ et $G_2$ dans le guide $G_2$. La sortie $O_1$ montre d'autre part une extinction. Cette étape est illustrée figure 5b.

– En alimentant au contraire les électrodes 21 et 11, on peut obtenir le multiplexage des signaux de longueurs d'onde $\lambda_1$, $\lambda_2$ des guides $G_1$ et $G_2$ dans le guide $G_1$ avec extinction de la sortie $O_2$. Cette étape est illustrée figure 5c.

Dans le cas où toutes les électrodes 11, 12, 21 et 22 sont reliées entre elles, le faisceau $\phi_1$ injecté en $I_1$ dans le guide $G_1$ est dévié vers la zone intermédiaire 3 et sort en $O_2$ par le guide $G_2$, tandis que le faisceau $\phi_2$ injecté en $I_1$ croise ce dernier faisceau dans la zone intermédiaire 3 et sort en $O_1$ par le guide $G_1$. Il y a commutation simple des faisceau $\phi_1$ et $\phi_2$ qui peuvent éventuellement être de même longueur d'onde $\lambda$. Ce cas est illustré par la figure 6.

La commutation peut être déclenchée soit par effet électro–optique, soit par injection de porteurs de charges.

## I– Exemple de réalisation du type électro–optique

Tout à fait à titre d'exemple, un procédé de réalisation avantageux d'un élément de commutation selon l'invention est décrit ci–après, ce procédé met en oeuvre la croissance épitaxiale en phase liquide (LPE) ou la croissance épitaxiale en phase vapeur (VPE), cette dernière étant préférée.

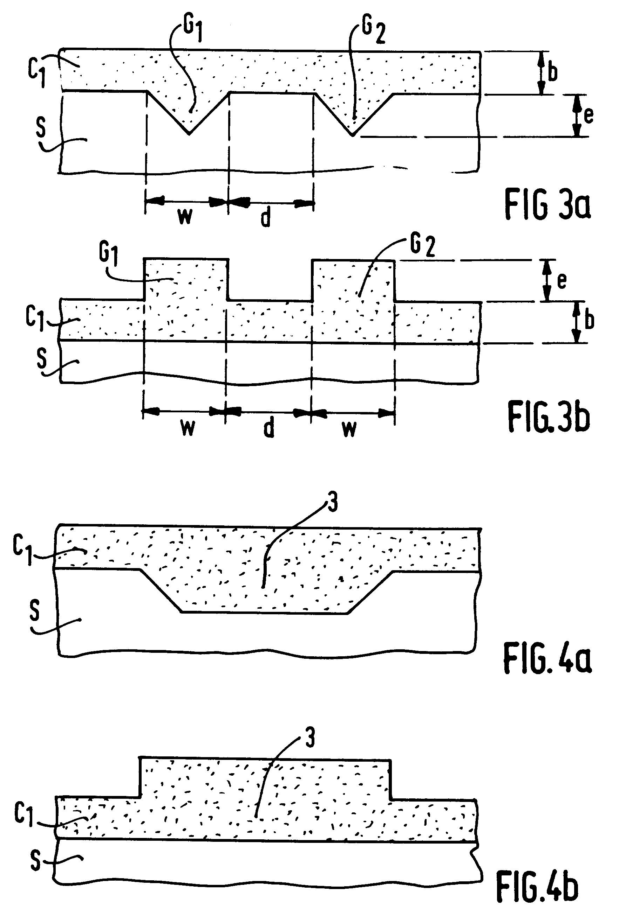

Un substrat S monocristallin orienté (Fig.3a, 4a) est d'abord réalisé de type de conductivité $n^+$, c'est–à–dire dopé à 2 à $4.10^{18}$ impuretés/cm³ ou bien une telle couche $n^+$ est réalisée en surface d'un substrat semi–isolant. En surface de cette couche S de type $n^+$, des cannelures sont pratiquées par gravure anisotrope parallèlement à un axe cristallographique de façon que ces cannelures présentent des parois longitudinales formées par des facettes cristallines.

Ensuite une couche $C_1$ de type de conductivité $n^-$, c'est–à–dire dopée à une valeur inférieure à $10^{16}$ impuretés/cm³, est réalisée en surface de la couche S par croissance VPE de préférence. En effet, par ce procédé, la vitesse de croissance à partir des parois longitudinales de la cannelure peut être plus élevée que la vitesse de croissance sur la surface supérieure de la couche S. C'est pourquoi, grâce à la croissance VPE, la surface supérieure de la couche $C_1$ va être de type PLANAR. Un tel résultat pourrait plus difficilement être obtenu avec les types de croissance dits MOVPE ou MBE qui constituent le plus souvent des couches d'épaisseur uniforme, ne permettant pas d'obtenir une structure PLANAR à partir d'une cannelure. Les cannelures ainsi remplies par la couche $C_1$ forment les guides $G_1$, $G_2$ et la zone intermédiaire 3 comme montré dans la figure 3a en coupe selon l'axe I–I de la figure 2 ou dans la figure 4a en coupe selon l'axe II–II de la figure 2.

Le substrat S est choisi favorablement en arséniure de gallium GaAs dopé au silicium pour obtenir la conductivité de type $n^+$.

La couche $C_1$ est réalisée favorablement au moyen d'arséniure de gallium GaAs de type n non dopée intentionnellement, ce qui permet d'obtenir la conductivité $n^-$. La surface du substrat sur laquelle sont réalisés les guides est de préférence une face cristalline d'orientation (1 0 0). L'axe des guides de lumière est orienté de préférence parallèlement à l'axe cristallographique [1 1 0] ou à l'axe cristallographique [1 $\bar{1}$ 0].

Selon une méthode de réalisation des guides moins favorable à l'invention, mais néanmoins utilisable, le substrat S n'est pas gravé, mais présente une surface plane. La couche $C_1$ est réalisée en surface, et les formes des guides $G_1$ et $G_2$ et de la zone intermédiaire 3 sont ensuite délimitées par un masque. Une gravure de la couche $C_1$ est alors réalisée autour des guides $G_1$, $G_2$ et de la zone 3 masquée, en sorte qu'après gravure les guides et la zone 3 apparaissent en relief, comme montré dans la figure 3b en coupe selon l'axe I–I de la figure 2, et dans la figure 4b en coupe selon l'axe II–II de la figure 2. Cette méthode de formation des guides est moins favorable que la méthode qui inclut la formation des guides dans des cannelures et une surface planarisée, du fait que les électrodes sont moins faciles à réaliser sur une surface non plane. Cependant, si cette méthode est utilisée, on choisira de préférence les matériaux et orientations tels que décrits plus haut.

Dans ces exemples de réalisation, la couche $C_1$ présente une épaisseur de l'ordre de 2,5$\mu$m, les guides ont une largeur w $\simeq$ 3 à 4$\mu$m, sont séparés par une distance

d $\simeq$ 8 à 10$\mu$m et

ont une dimension transversale (voir figures 3a et 3b)

b ≃ 4μm,

et la zone 3 a une dimension longitudinale (voir figure 2)

D ≃ 500μm

En surface des guides d'onde $G_1$, $G_2$ et de la zone 3, sont ensuite réalisées les électrodes 10, 11, 12, 21 et 22. Pour obtenir un fonctionnement électro-optique de l'élément de commutation selon l'invention, ces électrodes seront du type Schottky, c'est-à-dire réalisées au moyen d'une couche multiple de titane-platine-or (Ti-Pt-Au) par exemple.

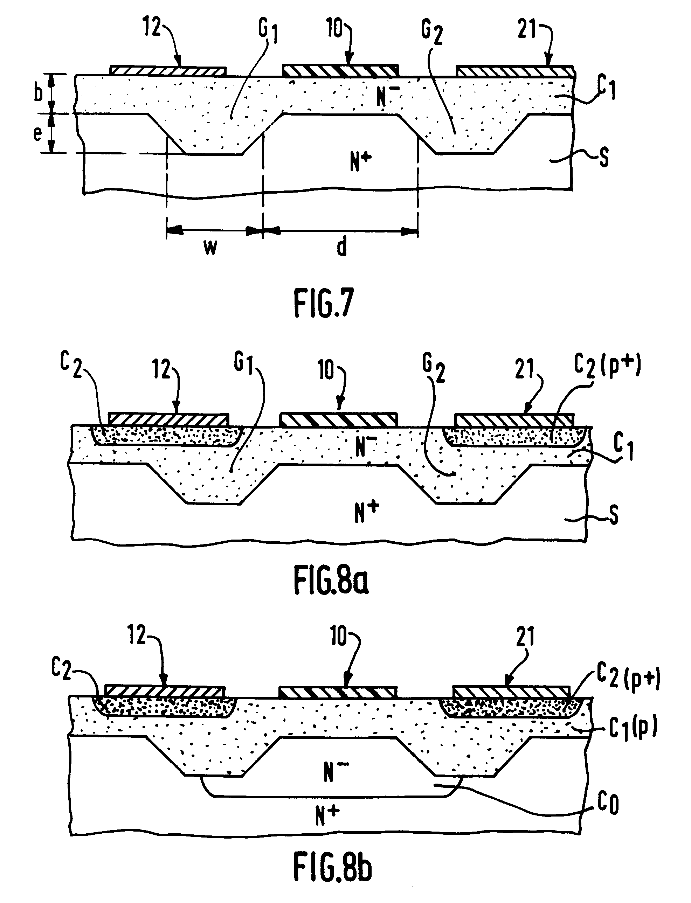

La structure de ce dispositif est représentée en coupe selon l'axe I-I sur la figure 7. Telles que représentées sur cette figure 7, les cannelures formant les guides $G_1$ et $G_2$ montrent en coupe une forme légèrement différente de celle de la figure 3a. Cela est simplement dû au fait que l'on a représenté ici des facettes cristallographiques d'orientation différente, qui peuvent également être obtenues dans le procédé décrit plus haut.

L'angle $\theta$ ayant été choisi pour obéir à la relation :

$$\theta_2 \simeq 2\,\Delta_n/n$$

et en fonctionnement électro-optique $\Delta_n$ étant donné par la relation :

$$\Delta_n \simeq (1/2)n_1^3 \; r_{41}E,$$

dans laquelle E est l'énergie dûe au champ électrique et $r_{41}$ est une constante du milieu, la relation précédente devient donc :

$$\theta^2 \simeq n_1^2 \; r_{41}E.$$

## II- Exemple de réalisation du type à injection de porteurs de charges

Les guides de lumière peuvent être réalisés au moyen des mêmes procédés que ceux qui ont été décrits précédemment, c'est-à-dire soit à partir de cannelures dans un substrat, soit en forme de ruban en relief dans une couche $C_1$.

Mais le matériau choisi comme substrat S sera ici avantageusement le phosphure d'indium (InP) de type $n^+$ à $4.10^{18}$ impuretés par $cm^3$. Le matériau choisi pour la couche $C_1$ sera le phosphure d'indium (InP) de type $n^-$ à $10^{15}$ impuretés résiduelles par $cm^3$.

De plus, les électrodes doivent ici être constituées par la superposition d'une couche $C_2$ de phosphure d'indium (InP) de type $P^+$ à $10^{19}$ impuretés par $cm^3$, et d'une couche formant contact ohmique, par exemple un alliage or-germanium (Au-Ge). Les impuretés choisies pour réaliser la conductivité $n^+$ seront par exemple du soufre (S), et la conductivité $p^+$ du zinc (Zn).

Comme il a été dit précédemment, les tensions de polarisation des électrodes sont appliquées entre ces électrodes et une électrode supplémentaire dite première électrode, non représentée, en contact avec le substrat, qui est avantageusement portée à la masse. Cette électrode est réalisée dans une zone dénudée du substrat à proximité de l'élément de commutation, soit sur la face opposée du substrat, soit sur la face qui reçoit l'élément de commutation. Cette électrode supplémentaire dite première électrode est de type ohmique.

Si une tension V > O est appliquée sur les électrodes 10, 11, 12, 21, 22, l'élément de commutation fonctionne par injection de porteurs de charges. Si une tension V < O est appliquée sur ces électrodes, le système peut fonctionner par effet électro-optique comme dans l'exemple 1.

La structure de ce système est représentée, en coupe selon l'axe I-I de la figure 2, sur la figure 8a.

Une autre structure représentée figure 8b peut également être favorable au fonctionnement de l'élément de commutation décrit dans le présent exemple. Le substrat S est en phosphure d'indium (InP) de type $n^+$. Une couche $C_0$ de conductivité $n^-$ en phosphure d'indium (InP) est réalisée sous-jacente aux guides $G_1$ et $G_2$ qui sont alors en arséniure de gallium et d'indium de type p (GaInAs-p). Les contacts sont réalisés comme précédemment au moyen de la couche $C_2$ de phosphure d'indium de type $p^+$ et d'un contact ohmique de métal allié tel que l'or-germanium.

Dans ce dernier cas les couches $C_0$, $C_1$, $C_2$ sont choisies ainsi que le substrat S pour que leurs indices de réfraction permettent le confinement de la lumière dans les guides. La couche $C_0$ peut présenter un dopage résiduel de l'ordre de $10^{15}$ impuretés par $cm^3$.

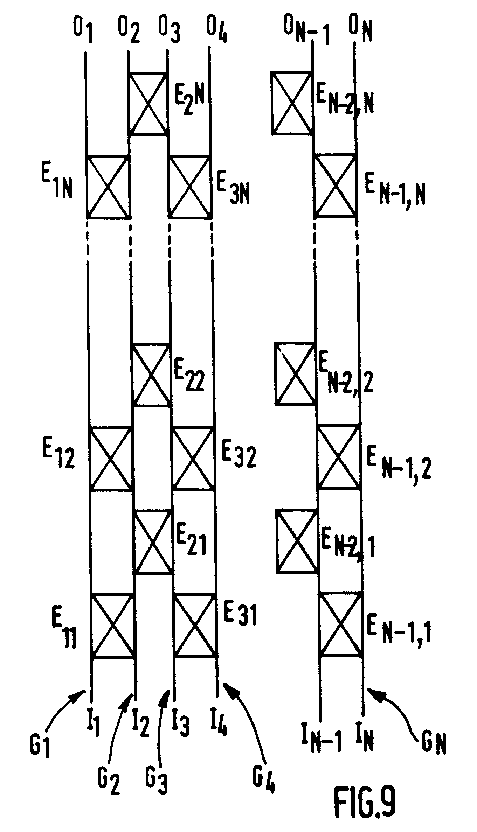

Au moyen de l'élément de commutation selon l'invention, peut être réalisée une matrice de commutation de N entrées $I_1$, $I_2$, $I_n$ dans N sorties $O_1$, $O_2$, $O_n$, comme représenté à la figure 9.

N guides $G_1$, $G_2$,... $G_N$ sont réalisés parallèles et séparés d'une distance latérale d sur un substrat semiconducteur, par exemple selon un des procédés décrits précédemment. Les éléments de commutation E selon l'invention sont disposés en quinconce comme montré à la figure 9. Pour obtenir la commutation des N entrées dans les N sorties, il est nécessaire d'utiliser seulement un nombre :

$C_N = N (N-1)/2$ d'éléments de type E,

ce qui est bien inférieur au nombre d'éléments de commutation utilisés pour obtenir le même résultat dans la matrice selon le premier art antérieur cité, ce nombre étant de $N^2$. De plus, chaque élément étant de beaucoup plus faible surface, la matrice sera alors de très faible surface compatible avec l'idée que le concepteur se fait d'un circuit intégré. Enfin les diverses réalisations proposées pour réaliser l'élément de commutation sont en synergie de fabrication avec un circuit intégré. Ceci permet d'intégrer monolithiquement sur le même substrat que la matrice une mémoire morte pour mémoriser les états des électrodes nécessaires à la commutation et pour obtenir ainsi une commande simple et efficace de la matrice.

On notera que, par rapport au premier art antérieur cité, les pertes dans les guides d'une telle matrice sont équilibrées, ce qui présente un gros avantage. En effet, le trajet pour commuter de $I_1$ dans $O_N$ n'est pratiquement pas plus long que le trajet pour commuter de $I_{N-1}$ dans $O_N$. De plus les pertes dans chaque élément de commutation sont extrêmement faibles puisque la lumière est toujours guidée, ce qui n'est pas le cas dans le second art antérieur cité.

**Revendications**

1. Elément de commutation optique intégré, ayant deux rubans formant desdits premier et second guides de lumière $G_1$ et $G_2$, monomodes, confinés sur un substrat (S), et parallèles dans la zone de commutation, et ayant au moins deux électrodes (11, 21) pour l'application de potentiels de commande de la commutation, associées obliquement chacune à un guide, avec une extrémité couvrant le guide, chacune découvrant progressivement le guide à partir de cette extrémité en s'écartant de la zone de commutation selon un angle $\theta$ par rapport au guide, caractérisé en ce que la distance d entre guides est supérieure à la distance dite de couplage et qu'un ruban (3) de même matériau que les guides $G_1$, $G_2$ emplit l'intervalle d entre ces derniers sur la longueur de couplage D pour former avec les guides la zone de commutation, en ce que les matériaux du substrat S d'une part et des guides $G_1$, $G_2$ d'autre part sont des semiconducteurs de types de conductivités différents et qu'une électrode supplémentaire dite première électrode est en contact avec le substrat S pour l'application d'un potentiel de référence par rapport à ceux appliqués sur les électrodes obliques 11, 21 dites seconde et troisième électrodes, en ce que les électrodes obliques 11, 21 en forme de rubans ont leur extrémité couvrant les guides à proximité de l'axe de symétrie transversale XX' de la zone de commutation, de part et d'autre de cet axe, en ce que les guides $G_1$, $G_2$ sont parallèles sur une longueur 2D symétriquement par rapport à l'axe de symétrie transversale XX' de la zone de commutation, en ce que lesdites seconde et troisième électrodes (11, 21) ont sensiblement une longueur D de part et d'autre de cet axe, et en ce que l'angle $\theta$ entre un guide et son électrode est donné par $\theta^2 \simeq 2(n_1 - n_o)/n_1$, relation dans laquelle $n_1$ est l'indice de réfraction du matériau des guides et $n_o$ celui du substrat avec $n_o < n_1$ pour le confinement de la lumière dans les guides.

2. Elément selon la revendication 1, caractérisé en ce que les guides $G_1$, $G_2$ et les électrodes (11, 21) ont la forme de rubans ayant sensiblement la même dimension transversale w.

3. Elément selon l'une des revendications 1 ou 2, caractérisé en ce qu'il comprend en outre une quatrième et une cinquième électrodes (12, 22), respectivement symétriques des seconde et troisième électrodes (11, 21) par rapport à l'axe de symétrie longitudinal YY' de cet élément de commutation.

4. Elément selon l'une des revendications 1 à 3, caractérisé en ce qu'il comprend en outre une sixième électrode (10) en forme de ruban s'étendant sensiblement sur une longueur 2D, et symétriquement par rapport à l'axe transversal XX', sur la zone comprise entre les deux guides et sur une largeur mesurée perpendiculairement à l'axe longitudinal YY' qui n'excède la distance d séparant les guides, et disposée de manière à ne pas présenter de contact électrique avec l'une des électrodes précédentes.

5. Elément selon l'une des revendications 1 à 4, caractérisé en ce que le substrat S est en arséniure de gallium (GaAs) de type de conductivité $n^+$, en ce que les rubans formant les guides de lumière sont en arséniure de gallium (GaAs) de type de conductivité $n^-$, en ce que les électrodes (11, 21, 12, 22) sont de type Schottky, et en ce que le fonctionnement est du type électro-optique.

**6.** Elément selon l'une des revendications 1 à 4, caractérisé en ce que le substrat S est en phosphure d'indium (InP) de type de conductivité $n^+$, en ce que les rubans formant les guides de lumière ($G_1$, $G_2$) sont en phosphure d'indium (InP) de type de conductivité $n^-$, en ce que les électrodes (11, 21, 12, 22) sont formées par la superposition d'une couche $C_2$ de phosphure d'indium (InP) de type de conductivité $p^+$ et d'un contact ohmique, et en ce que l'élément de commutation fonctionne alors par injection de porteurs de charges.

**7.** Elément selon l'une des revendications 1 à 4, caractérisé en ce que le substrat S est en phosphure d'indium (InP) de type de conductivité $n^+$, les rubans formant les guides $G_1$, $G_2$ sont en phosphure d'indium (InP) de type de conductivité p, en ce que sous les guides et la zone intermédiaire (3) aux guides est disposée une couche $C_0$ de phosphure d'indium (InP) de type de conductivité $n^-$ en surface du substrat limitée à la zone de commutation, en ce que les électrodes sont formées par la superposition d'une couche $C_2$ de phosphure d'indium (InP) de type de conductivité $p^+$ et d'un contact ohmique, et en ce que l'élément de commutation fonctionne par injection de porteurs de charges.

**8.** Procédé de réalisation de l'élément selon l'une des revendications 5 ou 6, caractérisé en ce qu'il comprend au moins les étapes suivantes :

a/ réalisation d'un substrat S en un matériau semiconducteur de type de conductivité $n^+$, d'indice de réfraction $n_0$ ;

b/ gravure de ce substrat S pour former des cannelures linéaires et parallèles, espacées de la distance d définie comme distance latérale entre les guides, et pour former une cavité de même profondeur que les cannelures qui s'étend d'une façon continue entre les guides sur la distance latérale d et sur une distance longitudinale D définie comme la longueur de couplage, les zones ainsi gravées délimitant les guides d'onde et la zone de commutation ;

c/ réalisation en surface du substrat ainsi que dans les cannelures et cavités, d'une couche $C_1$ d'un matériau semiconducteur de type de conductivité $n^-$, d'indice de réfraction $n_1$ tel que : $n_0 < n_1$ ;

d/ réalisation en contact avec le matériau du substrat, dans une zone du substrat mise à nu à proximité de la zone de commutation et choisie parmi une zone de la face du substrat opposée à la couche $C_1$, ou une zone de la face du substrat qui reçoit la couche $C_1$ d'une électrode dite première électrode du type contact ohmique ;

e/ réalisation en surface des guides $G_2$ et $G_1$ respectivement desdites seconde et troisième électrodes.

**9.** Procédé selon la revendication 8, de réalisation d'un élément selon la revendication 3, caractérisé en ce qu'il comprend en outre l'étape de :

f/ réalisation en surface des guides $G_1$ et $G_2$ respectivement desdites quatrième et cinquième électrodes.

**10.** Procédé selon la revendication 9, de réalisation d'un élément selon la revendication 4, caractérisé en ce qu'il comprend en outre l'étape de :

g/ réalisation en surface de la zone intermédiaire aux guides de ladite sixième électrode.

**11.** Procédé de réalisation selon l'une des revendications 8, 9 ou 10, caractérisé en ce que les étapes b et c sont remplacées par les étapes suivantes :

b'/ réalisation en surface du substrat de deux rubans $G_1$ et $G_2$ formant les guides, de largeur w, d'épaisseur e, parallèles, séparés par une distance latérale d, en un matériau semiconducteur de type de conductivité $n^-$, d'indice de réfraction $n_1$, tel que $n_0 < n_1$ ;

c'/ réalisation en surface du substrat entre les deux guides $G_1$ et $G_2$ d'un ruban du même matériau que les guides disposé continûment d'un guide à l'autre, sur la distance d transversalement à l'axe longitudinal de symétrie du système des deux guides et sur une distance D parallèlement à cet axe, de même épaisseur e que les guides.

**12.** Procédé de réalisation selon l'une des revendications 8, 9, 10, 11, pour réaliser un élément selon la revendication 7, caractérisé en ce qu'il comprend en outre, entre les étapes a et b, ou entre les étapes a et b', l'étape supplémentaire a' de :

a'/ réalisation d'une couche de type de conductivité $n^-$ en surface du substrat, à l'emplacement de la zone destinée à recevoir la zone intermédiaire,

et en ce que les étapes c ou c' sont remplacées par c'' :

c''/ réalisation en surface du substrat ainsi que dans les cannelures et cavités d'une couche de type de conductivité p d'indice

$n_1 > n_0$.

13. Procédé selon la revendication 12, caractérisé en ce que dans l'étape a' la couche n⁻ est faite par implantation ionique.

14. Procédé de commutation entre deux guides de lumière, mettant en oeuvre un élément de commutation selon l'une des revendications 1 à 4, caractérisé en ce qu'il implique l'application d'une même tension à la fois sur la seconde et sur la troisième électrode pour obtenir la commutation du second guide vers le premier.

15. Procédé de commutation entre deux guides de lumière, mettant en oeuvre un élément de commutation selon l'une des revendications 3 ou 4, caractérisé en ce qu'il implique l'application d'une même tension à la fois sur la quatrième et sur la cinquième électrode pour obtenir la commutation du premier guide vers le second.

16. Procédé de commutation entre deux guides de lumière, mettant en oeuvre un élément de commutation selon l'une des revendications 3 ou 4, caractérisé en ce qu'il implique l'application d'une même tension à la fois sur la seconde, troisième, quatrième et cinquième électrode pour obtenir simultanément la commutation du premier guide vers le second et du second guide vers le premier.

17. Procédé de commutation entre deux guides de lumière, mettant en oeuvre un élément selon la revendication 4, caractérisé en ce qu il comprend des étapes de procédé selon l'une des revendications 14, 15 ou 16 alternées avec une étape impliquant l'application d'une tension sur ladite sixième électrode, étape pendant laquelle la commutation est interrompue afin de permettre un séquencement des opérations de commutation entre les guides.

18. Matrice de commutation comportant un nombre N d'entrée $I_1$, $I_2$... $I_N$ et un nombre N de sorties $O_1$, $O_2$, ..., $O_N$ entre lesquels s'opère la commutation, caractérisée en ce qu'elle comprend un nombre $N(N-1)/2$ éléments de commutation selon l'une des revendications 1, 2 ou 3, appliqués en quinconce sur N guides de lumière disposés parallèlement et de façon équidistante entre les N entrées et les N sorties.

19. Procédé de commutation entre N entrées $I_1$, $I_2$, ..., $I_N$ et N sorties $O_1$, $O_2$, ..., $O_N$ mettant en oeuvre une matrice selon la revendication 18, caractérisé en ce qu'il inclut un séquencement d'opérations de commutation selon la revendication 17.

20. Matrice de commutation selon la revendication 18, caractérisée en ce qu'il lui est associée une mémoire morte monolithiquement intégrée sur le même substrat.

**Claims**

1. Integrated optical switching element having two strips forming said first and second monomode optical waveguides $G_1$ and $G_2$ confined on a substrate (S) and parallel in the switching area and having at least two electrodes (11, 21) for applying switching control potentials each associated obliquely with one guide with one end covering the guide and each progressively uncovering the guide from this end as it diverges from the switching area at an angle $\theta$ relative to the guide, characterised in that the distance $\underline{d}$ between guides is greater than the so-called coupling distance and that a strip (3) of the same material as the guides $G_1$, $G_2$ fills the gap $\underline{d}$ between the latter over the coupling length D to form with the guides the switching area, in that the materials of the substrate S and guides $G_1$, $G_2$ are semiconductors of different conductivity type and that an additional so-called first electrode is in contact with the substrate S for application of a reference potential relative to those applied to the oblique electrodes 11, 21 called the second and third electrodes, in that the stripform electrodes 11, 21 have their end covering the guide near the transverse axis of symmetry XX' of the switching area, on either side of said axis, in that the guide $G_1$, $G_2$ are parallel over a length 2D symmetrically to the transverse axis of symmetry XX' of the switching area, in that said second and third electrodes (11, 21) are substantially of length D on either side of said axis, and in that the angle $\theta$ between a guide and its electrode is given by the equation $\theta^2 \simeq 2(n_1-n_0)/n_1$ in which $n_1$ is the refractive index of the material of the guides and $n_0$ is that of the substrate and where $n_0 < n_1$ so that light is confined in the guide.

2. Element according to claim 1 characterised in that the guides $G_1$, $G_2$ and the electrodes (11, 21) are in the form of strips having substantially the same transverse dimension $\underline{w}$.

3. Element according to claim 1 or claim 2 characterised in that it further comprises fourth and fifth electrodes (12, 22) respectively symmetrical to second and third electrodes (11, 21) relative to the longitudinal axis of symmetry YY' of said switching element.

4. Element according to any one of claims 1 to 3 characterised in that it further comprises a stripform sixth electrode (10) substantially of length 2D and symmetrical relative to the transverse axis XX' in the area between the two guides and over a width as measured perpendicularly to the longitudinal axis YY' which does not exceed the distance $\underline{d}$ between the guides and disposed so as to have no electrical contact with one of the preceding electrodes.

5. Element according to any one of claims 1 to 4 characterised in that the substrate S is of $n^+$ conductivity type gallium arsenide (GaAs), in that the strips forming the optical waveguides are of $n^-$ conductivity type gallium arsenide (GaAs) and in that the electrodes (11, 21, 21, 22) are Schottky type electrodes, and in that the element operates electro-optically.

6. Element according to any one of claims 1 to 4 characterised in that the substrate S is of $n^+$ conductivity type indium phosphide (InP), in that the strips forming the optical waveguides ($G_1$, $G_2$) are of $n^-$ conductivity type indium phosphide (InP), in that the electrodes (11, 21, 12, 22) are formed by superposing a $p^+$ conductivity type indium phosphide (InP) layer $C_2$ and an ohmic contact and in that the switching element operates by injection of charge carriers.

7. Element according to any one of claims 1 to 4 characterised in that the substrate S is of $n^+$conductivity type indium phosphide (InP), the strips forming the guides $G_1$, $G_2$ are of $\underline{p}$ conductivity type indium phosphide (InP), in that under the guides and the intermediate area (3) between the guides is an $n^-$ conductivity type indium phosphide (InP) layer $C_0$ on the surface of the substrate limited to the switching area, in that the electrodes are formed by superposing a $p^+$ conductivity type indium phosphide (InP) layer $C_2$ and an ohmic contact and in that the switching element operates by injection of charge carriers.

8. Method of obtaining the element according to claim 5 or claim 6 characterised in that it comprises at least the following steps:
   a) forming a substrate S of an $n^+$ conductivity type semiconductor material of refractive index $n_0$;
   b) etching said substrate S to form linear parallel channels spaced by the distance $\underline{d}$ defined as the lateral distance between the guides and to form a cavity the same depth as the channels extending continuously between the guides over the lateral distance $\underline{d}$ and over a longitudinal distance D defined as the coupling length, the areas etched in this way delimiting the waveguides and the switching area;
   c) forming on the surface of the substrate and in the channels and cavity an $n^-$ conductivity type semiconductor material layer $C_1$ of refractive index $n_1$ where $n_0 < n_1$;
   d) forming an ohmic contact type first electrode in contact with the material of the substrate in a stripped area of the substrate near the switching area and either on the side of the substrate opposite the $C_1$ layer or on the side of the substrate which receives the $C_1$ layer;
   e) forming on the surface of the guides $G_2$ and $G_1$ said second and third electrodes, respectively.

9. Process according to claim 8 of obtaining an element according to claim 3 characterised in that it further comprises the step of:
   f) forming on the surface of the guides $G_1$ and $G_2$ said fourth and fifth electrodes, respectively.

10. Method according to claim 9 of producing an element according to claim 4 characterised in that it further comprises the step of:
   g) forming said sixth electrode on the surface of the intermediate area between the guides.

11. Method according to any one of claims 8, 9 or 10 characterised in that the steps $\underline{b}$ and $\underline{c}$ are replaced by the following steps:
   b') forming on the surface of the substrate two parallel strips $G_1$ and $G_2$ forming the guides, of width $\underline{w}$, of thickness $\underline{e}$, separated by a lateral distance $\underline{d}$, in an $n^-$ conductivity type semiconductor material having a refractive index $n_1$ such that $n_0 < n_1$;
   c') forming on the surface of the substrate between the guides $G_1$ and $G_2$ a strip of the same material as the guide disposed continuously from one guide to the other over the distance $\underline{d}$ transverse to the longitudinal axis of symmetry of the system of the two guides and over a distance D parallel to said axis, of the same thickness $\underline{e}$ as the guide.

**12.** Method according to any one of claims 8, 9, 10 or 11 for producing an element according to claim 7 characterised in that it further comprises, between steps a and b or between steps a and b', the supplementary step of:

a') forming an $n^-$ conductivity type layer on the surface of the substrate in the area intended to receive the intermediate area,

and in that step c or c' are replaced by the following step:

c'') producing on the surface of the substrate and in the channels and cavities a p conductivity type layer of refractive index $n_1 > n_0$.

**13.** Process according to claim 12 characterised in that in step a' the $n^-$ layer is formed by ionic implantation.

**14.** Method of switching between two optical waveguides using a switching element according to any one of claims 1 to 4 characterised in that it involves applying the same voltage to the second and third electrodes to switch from the second guide to the third.

**15.** Method of switching between two optical waveguides using a switching element according to claim 3 or claim 4 characterised in that it involves applying the same voltage simultaneously to the fourth and fifth electrodes to switch from the first waveguide to the second.

**16.** Method of switching between two optical waveguides using a switching element according to claim 3 or claim 4 characterised in that it involves applying the same voltage simultaneously to the second, third, fourth and fifth electrodes to obtain simultaneously switching from the first guide to the second and from the second guide to the first.

**17.** Method of switching between two optical waveguides using an element according to claim 4 characterised in that it comprises steps of the process according to any one of claims 14, 15 or 16 alternating with a step involving the application of a voltage to said fixed electrodes during which step switching is interrupted in order to enable a sequencing of switching operations between the guides.

**18.** Switching matrix comprising N inputs $I_1$, $I_2$, ..., $I_N$ and N outputs $O_1$, $O_2$, ..., $O_N$ between which switching is effected characterised in that it comprises $N(N-1)/2$ switching elements according to any one of claims 1 to 3 applied in a quincunx arrangement to N parallel optical waveguides disposed equidistantly between the N inputs and the N outputs.

**19.** Method of switching between N inputs $I_1$, $I_2$, ..., $I_N$ and N outputs $O_1$, $O_2$, ..., $O_N$ using a matrix according to claim 18 characterised in that it includes a sequencing of switching operations according to claim 17.

**20.** Switching matrix according to claim 18 characterised in that it is associated with a read-only memory monolithically integrated on the same substrate.

**Patentansprüche**

**1.** Integriertes optisches Schaltelement mit zwei Bändern, die erste und zweite Monomode-Lichtleiter $G_1$ und $G_2$ bilden, auf einem Substrat (S) eingeschlossen sind und in der Schaltzone parallel verlaufen, sowie mit mindestens zwei Elektroden (11, 21), um Schaltsteuerpotentiale anzulegen, wobei die Elektroden schräg je einem Lichtleiter zugeordnet sind und mit einem Ende den Lichtleiter überdecken sowie den Lichtleiter ausgehend von diesem Ende zunehmend freilassen, indem sie sich von der Schaltzone gemäß einem Winkel $\theta$ bezüglich des Lichtleiters entfernen, dadurch gekennzeichnet, daß der Abstand d zwischen Lichtleitern größer als der sogenannte Koppelabstand ist und daß ein Band (3) desselben Materials wie die Lichtleiter $G_1$, $G_2$ den Abstand d zwischen diesen Lichtleitern über eine Koppellänge D füllt, um mit diesen Lichtleitern die Schaltzone zu bilden, daß die Materialien des Substrats S einerseits und der Lichtleiter $G_1$, $G_2$ andererseits Halbleitermaterialien unterschiedlicher Leitfähigkeiten sind und daß eine zusätzliche Elektrode, erste Elektrode genannt, in Kontakt mit dem Substrat S ist, um ein Bezugspotential bezüglich der an die schräg verlaufenden Elektroden 11, 21, zweite und dritte Elektroden genannt, angelegten Potentiale zu empfangen, daß das die Lichtleiter überdeckende Ende der schrägen bandförmigen Elektroden 11, 21 in der Nähe der Quersymmetrieachse XX' der Schaltzone zu beiden Seiten dieser Achse liegt, daß die Lichtleiter $G_1$, $G_2$ über eine Länge 2D symmetrisch bezüglich der Quersymmetrieachse XX' der Schaltzone parallel verlaufen, daß die zweite und die dritten Elektrode (11, 21) im wesentlichen eine Länge D zu beiden Seiten dieser Achse besitzen und daß der Winkel $\theta$ zwischen einem Lichtleiter und seiner Elektrode durch die Beziehung $\theta^2 \approx 2(n_1-n_0)/n_1$

gegeben ist, in der $n_1$ der Brechungsindex des Materials der Lichtleiter und $n_o$ der des Substrats ist, mit $n_o < n_1$, zur Einschließung des Lichts in diesen Lichtleitern.

2. Element nach Anspruch 1, dadurch gekennzeichnet, daß die Lichtleiter $G_1$, $G_2$ und die Elektroden (11, 21) bandförmig sind und eine gleiche Querabmessung w besitzen.

3. Schaltelement nach einem der Ansprüche 1 oder 2, dadurch gekennzeichnet, daß es weiter eine vierte (12) und eine fünfte Elektrode (22) aufweist, die symmetrisch zur zweiten bzw. dritten Elektrode (11, 21) bezüglich der Längssymmetrieachse YY' dieses Schaltelements angeordnet sind.

4. Schaltelement nach einem der Ansprüche 1 bis 3, dadurch gekennzeichnet, daß es außerdem eine sechste Elektrode (10) in Form eines Bandes aufweist, die sich im wesentlichen über eine Länge 2D symmetrisch bezüglich der Quersymmetrieachse XX' über die zwischen den beiden Lichtleitern liegende Zone und über eine Breite erstrecken, die senkrecht zur Längssymmetrieachse YY' gemessen den Abstand d zwischen den Wellenleitern nicht überschreitet, wobei diese Zone so angeordnet ist, daß sich kein elektrischer Kontakt mit einer der vorherigen Elektroden ergibt.

5. Schaltelement nach einem der Ansprüche 1 bis 4, dadurch gekennzeichnet, daß das Substrat S aus Galliumarsenid (GaAs) mit der Leitfähigkeit $n^+$ ist, daß die die Lichtleiter bildenden Bänder aus Galliumarsenid (GaAs) mit der Leitfähigkeit $n^-$ sind, daß die Elektroden (11, 21, 12, 22) Schottky–Elektroden sind und daß der Schaltbetrieb vom elektrooptischen Typ ist.

6. Element nach einem der Ansprüche 1 bis 4, dadurch gekennzeichnet, daß das Substrat S aus Indiumphosphid (InP) der Leitfähigkeit $n^+$ ist, daß die die Lichtleiter ($G_1$, $G_2$) bildenden Bänder aus Indiumphosphid (InP) der Leitfähigkeit $n^-$ sind, daß die Elektroden (11, 21, 12, 22) durch Überlagerung einer Schicht $C_2$ von Indiumphosphid (InP) der Leitfähigkeit $p^+$ und eines ohm'schen Kontakts gebildet werden, und daß das Schaltelement dann durch Injektion von Ladungsträgern wirksam wird.

7. Schaltelement nach einem der Ansprüche 1 bis 4, dadurch gekennzeichnet, daß das Substrat S aus Indiumphosphid (InP) der Leitfähigkeit $n^+$ ist, daß die die Lichtleiter $G_1$, $G_{12}$

bildenden Bänder aus Indiumphosphid (InP) der Leitfähigkeit p sind, daß unter den Lichtleitern und der Zwischenzone (3) zwischen den Lichtleitern eine Schicht $C_0$ aus Indiumphosphid (InP) der Leitfähigkeit $n^-$ auf der Substratoberfläche ausgebildet ist, die auf die Schaltzone begrenzt ist, daß die Elektroden durch Übereinanderschichtung einer Schicht $C_2$ aus Indiumphosphid (InP) der Leitfähigkeit $p^+$ und eines ohm'schen Kontakts gebildet werden und daß das Schaltelement durch Injektion von Ladungsträgern wirksam wird.

8. Verfahren zur Herstellung des Elements nach einem der Ansprüche 5 oder 6, dadurch gekennzeichnet, daß es mindestens die folgenden Verfahrensschritte aufweist:
   a/ Herstellung eines Substrats S aus einem Halbleitermaterial des Leitfähigkeitstyps $n^+$ mit einem Brechungsindex $n_0$;
   b/ Ätzen dieses Substrats S, um geradlinige und parallele Rillen zu erzeugen, die einen Abstand d besitzen, der als Seitenabstand zwischen den Lichtleitern definiert ist, und um eine Vertiefung derselben Tiefe wie die Rillen zu bilden, die sich kontinuierlich zwischen den Lichtleitern über den seitlichen Abstand d und über eine Länge D erstreckt, die als die Koppellänge definiert ist, wobei die so geätzten Zonen die Lichtleiter und die Schaltzone begrenzen;
   c/ Herstellung einer Schicht $C_1$ in den Rillen und Vertiefungen aus einem Halbleitermaterial des Leitfähigkeitstyps $n^-$ und mit einem Brechungsindex $n_1$, derart, daß gilt $n_0 < n_1$;
   d/ Herstellung einer erste Elektrode genannten Elektrode vom ohm'schen Kontakttyp in Kontakt mit dem Material des Substrats in einer Zone des Substrats, die in der Nähe der Schaltzone freigelegt wurde und entweder auf der der Schicht $C_1$ entgegengesetzten Seite des Substrats oder auf derselben Seite wie die Schicht $C_1$ liegt;
   e/ Herstellung der zweiten und dritten Elektroden auf der Oberfläche der Lichtleiter $G_2$ bzw. $G_1$.

9. Verfahren nach Anspruch 8 zur Herstellung eines Schaltelements nach Anspruch 3, dadurch gekennzeichnet, daß es weiter folgenden Verfahrensschritt aufweist:
   f/ Herstellung der vierten und fünften Elektroden auf den Oberflächen der Lichtleiter $G_1$ bzw. $G_2$.

10. Verfahren nach Anspruch 9 zur Herstellung eines Schaltelements nach Anspruch 4, dadurch gekennzeichnet, daß es weiter folgenden Verfahrensschritt aufweist:

g/ Herstellung der sechsten Elektrode auf der Oberfläche der Zwischenzone zwischen den Lichtleitern.

11. Herstellungsverfahren nach einem der Ansprüche 8, 9 oder 10, dadurch gekennzeichnet, daß die Verfahrensschritte b und c durch folgende Verfahrensschritte ersetzt werden:

b'/ Herstellung von zwei die Lichtleiter bildenden parallelen und einen seitlichen Abstand d aufweisenden Bändern $G_1$ und $G_2$ einer Breite w und einer Dicke e aus einem Halbleitermaterial eines Leitfähigkeitstyps $n^-$ und mit einem Brechungsindex $n_1$ derart, daß gilt $n_0 < n_1$, auf der Oberfläche des Substrats;

c'/ Herstellung eines Bandes aus demselben Material wie die beiden Lichtleiter $G_1$ und $G_2$ auf der Oberfläche des Substrats zwischen den beiden Lichtleitern $G_1$ und $G_2$, wobei dieses Band sich kontinuierlich von einem Lichtleiter zum anderen über den Querabstand d bezüglich der Längssymmetrieachse des Systems der beiden Lichtleiter und über eine Strecke D parallel zu dieser Achse erstreckt und dieselbe Dicke e wie die Lichtleiter besitzt.

12. Herstellungsverfahren nach einem der Ansprüche 8, 9, 10 und 11 zur Herstellung eines Schaltelements nach Anspruch 7, dadurch gekennzeichnet, daß es außerdem zwischen den Verfahrensschritten a und b oder auch zwischen den Verfahrensschritten a und b' den folgenden zusätzlichen Verfahrensschritt a' enthält:

a'/ Herstellung einer Schicht des Leitfähigkeitstyps $n^-$ an der Oberfläche des Substrats in der Zone, die später die Zwischenzone wird,

und daß die Verfahrensschritte c oder c' ersetzt werden durch c'' wie folgt:

c''/ Herstellung einer Schicht der Leitfähigkeit p mit einem Index $n_1 > n_0$ an der Oberfläche des Substrats sowie in den Rillen und Vertiefungen.

13. Verfahren nach Anspruch 12, dadurch gekennzeichnet, daß in dem Verfahrensschritt a' die Schicht $n^-$ durch Ionenimplantierung hergestellt wird.

14. Verfahren zum Umschalten zwischen zwei Lichtleitern, das ein Schaltelement gemäß einem der Ansprüche 1 bis 4 verwendet, dadurch gekennzeichnet, daß es darin besteht, daß eine gleiche Spannung sowohl an die zweite als auch an die dritte Elektrode angelegt wird, um die Umschaltung vom zweiten Lichtleiter zum ersten zu erzielen.

15. Verfahren zum Umschalten zwischen zwei Lichtleitern, das ein Schaltelement gemäß einem der Ansprüche 3 oder 4 verwendet, dadurch gekennzeichnet, daß es darin besteht, eine gleiche Spannung sowohl an die vierte als auch an die fünfte Elektrode anzulegen, um eine Umschaltung vom ersten zum zweiten Lichtleiter zu erzielen.

16. Verfahren zum Umschalten zwischen zwei Lichtleitern, das ein Schaltelement gemäß einem der Ansprüche 3 oder 4 verwendet, dadurch gekennzeichnet, daß es darin besteht, daß eine gleiche Spannung zugleich an die zweite, dritte, vierte und fünfte Elektrode angelegt wird, um gleichzeitig die Umschaltung vom ersten Lichtleiter zum zweiten und vom zweiten Lichtleiter zum ersten zu bewirken.

17. Verfahren zum Schalten zwischen zwei Lichtleitern, das ein Schaltelement gemäß Anspruch 4 verwendet, dadurch gekennzeichnet, daß es die Verfahrensschritte der Ansprüche 14, 15 oder 16 alternierend mit einem Verfahrensschritt verwendet, in dem eine Spannung an die sechste Elektrode angelegt wird, wobei während dieses Verfahrensschritts die Durchschaltung unterbrochen wird, um eine Taktung der Schaltoperationen zwischen den Lichtleitern zu erzielen.

18. Schaltmatrix mit einer Anzahl N von Eingängen $I_1$, $I_2$, ... $I_N$ und eine Anzahl N von Ausgängen $O_1$, $O_2$ ... $O_N$, zwischen denen die Umschaltung erfolgt, dadurch gekennzeichnet, daß sie $N(N-1)/2$ Schaltelemente gemäß einem der Ansprüche 1, 2 oder 3 enthält, die versetzt und in gleichmäßigem Abstand zwischen den N Eingängen und den N Ausgängen auf N parallel und im gleichen Abstand angeordneten Lichtleitern angeordnet sind.

19. Verfahren zum Durchschalten zwischen N Eingängen $I_1$, $I_2$, ... $I_N$ und N Ausgängen $O_1$, $O_2$, ... $O_N$, das eine Matrix nach Anspruch 18 verwendet, dadurch gekennzeichnet, daß es eine Taktung der Umschaltoperationen nach Anspruch 17 enthält.

20. Schaltmatrix nach Anspruch 18, dadurch gekennzeichnet, daß ihr ein monolithisch auf demselben Substrat integrierter Festspeicher zugeordnet ist.

FIG.1b

FIG.1a

FIG.2

FIG 3a

FIG.3b

FIG.4a

FIG.4b

FIG.5a  FIG.5b  FIG.5c

FIG.6

FIG.7

FIG.8a

FIG.8b

FIG.9